# FASCICULE DE BREVET EUROPEEN

(11) **EP 3 727 888 B1**
(45) Date de publication et mention de la délivrance du brevet: **06.04.2022**
(21) Numéro de dépôt: 18800717.3
(22) Date de dépôt: 22.10.2018
(51) Int. Cl.: B60C 9/22, B60C 9/00, B60C 9/18

(54) **PNEUMATIQUE COMPRENANT DES ÉLÉMENTS DE RENFORT SOUS FORME DE BANDELETTES STRATIFIÉES**
REIFEN MIT VERSTÄRKUNGSELEMENTEN IN FORM VON LAMINIERTEN STREIFEN
TYRE COMPRISING REINFORCING ELEMENTS IN THE FORM OF LAMINATED STRIPS

(30) Priorité: 22.12.2017 FR 1762995
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: PATAUT, Gaël, 63040 Clermont-Ferrand Cedex 9 (FR); LE CLERC, Christophe, 63040 Clermont-Ferrand Cedex 9 (FR); PINEAU, Jacky, 63040 Clermont-Ferrand Cedex 9 (FR)
(74) Mandataire: Louret, Sylvain
(86) Numéro de dépôt international: PCT/FR2018/052626
(87) Numéro de publication internationale: WO 2019/122548

(56) Documents cités:
- EP-A1- 2 765 333
- EP-A1- 2 781 370
- EP-A1- 2 957 436
- EP-A1- 3 181 374
- WO-A1-2016/156434
- WO-A1-2017/013575

## Description

La présente invention concerne des éléments de renfort de pneumatique. Elle concerne plus particulièrement des éléments architecturaux de sommet de pneumatique.

Les pneumatiques à carcasse radiale, couramment appelés «pneumatiques radiaux », se sont progressivement imposés sur la plupart des marchés et en particulier sur le marché des pneumatiques pour véhicules de tourisme. Ce succès est dû en particulier aux qualités d'endurance, de confort, de légèreté et de faible résistance au roulement de la technologie radiale.

Le pneumatique radial est essentiellement constitué de flancs souples et d'un sommet plus rigide, les flancs s'étendant radialement des bourrelets jusqu'au épaules délimitant le sommet, le sommet supportant la bande de roulement du pneumatique. Chacune de ces parties du pneumatique ayant de fonctions propres, leur armature est également spécifique. Une caractéristique de la technologie radiale est qu'elle permet d'adapter précisément l'armature de chacune de ces parties de manière relativement indépendante.

Un pneumatique radial de tourisme comprend de manière connue une armature de carcasse radiale formée de renforts (généralement textiles) reliant les deux bourrelets du pneumatique et une armature de sommet comprenant :
- deux couches (ou nappes) croisées de triangulation de sommet consistant essentiellement en des renforts (généralement métalliques) formant chacune un angle d'environ 30 degrés avec la direction circonférentielle du pneumatique ;
- une ceinture de sommet consistant essentiellement en des renforts pratiquement parallèles à la direction circonférentielle du pneumatique, appelés souvent renforts à 0 degré même s'ils forment en général un angle non nul avec la direction circonférentielle, par exemple un angle allant de 0 à 10 degrés.

En schématisant, la carcasse a pour fonction première de contenir la pression interne du pneumatique, les nappes croisées ont pour fonction première de donner au pneumatique sa rigidité de dérive et la ceinture de sommet a pour fonction première de résister à la centrifugation de sommet à haute vitesse. En outre, la coopération de tous ces éléments d'armature crée ce que l'on appelle la « triangulation du sommet ». C'est cette triangulation qui procure au pneumatique sa capacité à maintenir une forme relativement cylindrique face aux diverses sollicitations.

Chacun de ces éléments de l'armature de sommet est généralement associé par calandrage à des mélanges élastomères. L'empilement de ces éléments est alors rendu solidaire au cours de la vulcanisation du pneumatique.

Après plusieurs décennies de recherche, de progrès et d'optimisation de l'architecture des pneumatiques radiaux, c'est la combinaison de tous ces éléments d'armature (carcasse, couches croisées, ceinture) qui permet au pneumatique radial d'atteindre les indéniables performances de confort, de longévité et de coût de revient qui font son succès. Tout au long de ce développement, on a cherché à améliorer les performances des pneumatiques, par exemple du point de vue de leur masse et de leur résistance au roulement. C'est ainsi que le sommet du pneumatique radial a vu progressivement son épaisseur diminuer par l'adoption de renforts de plus en plus performants et de calandrages de plus en plus minces de manière à fabriquer les pneumatiques les plus légers possibles, présentant une moindre résistance au roulement.

Le document WO2010115860 décrit un pneumatique pour véhicule de tourisme dans lequel l'armature de sommet est constituée de trois éléments distincts et séparés : une armature de carcasse radiale composée de renforts reliant les deux talons du pneumatique, une ceinture de sommet constituée essentiellement d'éléments de renfort parallèles à la direction circonférentielle du pneumatique, et une couche de sommet de triangulation constituée essentiellement d'éléments de renfort formant un angle par rapport à la circonférence du pneumatique. Une telle architecture présente de nombreux avantages du point de vue des performances du pneumatique, mais implique un procédé de fabrication complexe, avec de nombreuses étapes. Enfin, le nombre de sous-couches présentes limite les gains potentiels en termes de masse.

Le document EP 0101400 décrit un pneumatique radial ayant une pluralité de bandes annulaires semi-rigides disposées dans une portion de couronne du pneumatique. Les bandes sont disposées sensiblement sur toute la largeur de la bande de roulement du pneumatique. Selon un mode de réalisation particulier, la bande de roulement comprend une structure de renforcement avec une bande centrale et deux bandes latérales. Les bandes relativement larges, indépendantes les unes des autres, comportent chacune des renforts fibreux incorporés dans une matrice de résine époxy, formant une structure en arceaux semi-rigides. On retrouve ainsi une grande complexité de réalisation. De nombreux autres documents présentent des pneumatiques dont la zone de renfort de sommet comporte des bandelettes, parmi lesquels on peut citer EP 2 781 370, qui décrit des bandelettes de renfort constituées d'un stratifié composite, EP 2 765 333, EP 2 957 436, EP 3 181 374 et WO 2016/156434.

Pour pallier ces différents inconvénients, notamment la complexité de réalisation, le document WO2017/013575 décrit un pneumatique pour véhicule de tourisme comprenant une zone de renfort de sommet comportant deux couches superposées radialement, chaque couche étant constituée par des bandelettes composites enrobées d'une composition élastomère disposées de manière juxtaposées et avec un angle d'environ 0° par rapport à la direction circonférentielle, qui peuvent intégrer un film thermoplastique.

Cependant il existe également un besoin constant de réduire les émissions de bruit d'un pneumatique tout en maintenant ses autres performances, notamment les performances en termes de rigidité d'extension et rigidité en cisaillement tout en minimisant la masse de la zone de renfort de sommet des pneumatiques.

La demanderesse en poursuivant ses recherches a découvert qu'une nouvelle architecture de zone de renfort de pneumatique permettait tout en continuant à pallier les inconvénients connus des architectures classiques, a améliorer significativement les performances en termes d'émissions de bruit du pneumatique possédant une telle zone de renfort.

L'invention a donc pour objet un pneumatique comprenant une nappe de carcasse reliant deux bourrelets par l'intermédiaire de deux flancs, ladite nappe de carcasse étant surmontée radialement vers l'extérieur du pneumatique par une zone de renfort de sommet elle-même surmontée radialement vers l'extérieur du pneumatique par une bande de roulement, la zone de renfort de sommet comprenant une pluralité de bandelettes de renfort disposées sur au moins une nappe de bandelettes, lesdites bandelettes étant disposées de manière juxtaposées et avec un angle inférieur ou égal à 15° par rapport à la direction circonférentielle, caractérisé en ce que chaque bandelette de renfort est constituée par un stratifié de n≥2 couches composites, chaque couche composite comprenant des fibres orientées présentant un module en extension supérieur ou égal à 55 GPa, parallèles entre elles et formant un angle avec la direction circonférentielle, différent de 0° , lesdites fibres de chaque couche composite étant enrobées d'une matrice polymérique.

Les inventeurs à l'origine de l'invention émettent a posteriori l'hypothèse que le bruit généré par le pneumatique dépend essentiellement des coefficients transversaux et longitudinaux de Poisson de chaque stratifié et que plus ces coefficients de Poisson sont élevés, moins le bruit généré par le pneumatique est important. Les inventeurs ont ainsi découvert qu'en ne mettant pas de fibres à 0° dans chaque stratifié, les coefficients de Poisson de chaque stratifié étaient, toutes choses étant égales par ailleurs, plus élevés. Les inventeurs ont également découvert que pour pouvoir, en plus de réduire le bruit généré par le pneumatique, présenter une rigidité transversale satisfaisante du fait de l'absence de fibres orientées à 0°, les fibres orientées doivent présenter un module relativement élevé, et ici supérieur ou égal à 55 GPa conformément à l'invention.

Par pneumatique, on entend un bandage qui, une fois monté sur un support de montage, par exemple une jante, délimite une cavité fermée, cette cavité étant pressurisable par un gaz.

Conformément à l'invention, chaque bandelette forme un angle inférieur ou égal à 15° avec la direction circonférentielle du pneumatique. En effet, chaque bandelette, de par sa forme, s'étend selon une direction principale selon sa plus grande longueur et cette direction principale de la bandelette forme un angle inférieur ou égal à 15° avec la direction circonférentielle du pneumatique.

Dans un premier mode de réalisation, les fibres orientées sont constituées par des filés (appelés en anglais « roving ») unitaires parallèles entre eux. Dans ce mode de réalisation, chaque couche composite est constituée par les fibres orientées enrobées de la matrice polymérique.

Dans un deuxième mode de réalisation, les fibres orientées sont constituées par des éléments filaires d'un tissu comprenant des premiers éléments filaires sensiblement parallèles entre eux et des deuxièmes éléments filaires sensiblement parallèles entre eux s'entrecroisant avec les premiers éléments filaires, les fibres orientées étant soit les premiers éléments filaires soit les deuxièmes éléments filaires. Ce deuxième mode de réalisation permet ainsi de réaliser une seule couche composite comprenant des premières et deuxièmes fibres orientées appartenant à un même tissu là où le premier mode de réalisation aurait nécessité deux couches composites comprenant chacune des fibres orientées.

Dans un mode de réalisation préférentiel permettant d'améliorer les propriétés mécaniques du pneumatique, la zone de renfort de sommet comprend au moins deux nappes de bandelettes, une première nappe de bandelettes radialement à l'intérieur et une deuxième nappe de bandelettes radialement à l'extérieur, lesdites bandelettes de chaque première et deuxième nappe de bandelettes étant disposées de manière juxtaposées et avec un angle inférieur ou égal à 15° par rapport à la direction circonférentielle.

Toujours dans un mode de réalisation permettant d'améliorer les propriétés mécaniques du pneumatique, les bandelettes de ladite deuxième nappe de bandelettes recouvrent les bandelettes de ladite première nappe de bandelettes d'au moins 20%. Selon une variante de réalisation préférée de l'invention, le recouvrement moyen entre les bandelettes des deux nappes de bandelettes est supérieur ou égal à 40%.

Avantageusement, le recouvrement moyen entre les bandelettes des première et deuxième nappes de bandelettes est inférieur ou égal à 80%, de préférence à 60%.

Le recouvrement moyen entre des première et deuxième nappes de bandelettes est la moyenne des recouvrements unitaires des bandelettes de la première nappe par les bandelettes de la deuxième nappe. Le recouvrement unitaire entre une bandelette de la première nappe et une ou plusieurs bandelettes de la deuxième nappe est le rapport en pourcent de la largeur axiale de la projection radiale de la bandelette de la première nappe sur la ou les bandelettes de la deuxième nappe sur la largeur axiale de la bandelette de la première nappe.

Dans une variante dans laquelle le pneumatique comprend au moins trois nappes de bandelettes, le recouvrement moyen entre les bandelettes de chaque nappe de bandelettes recouvrant les bandelettes de la nappe de bandelettes qui lui est radialement intérieure est supérieur ou égal à 20%, de préférence à 40% et inférieur ou égal à 80%, de préférence à 60%.

Dans un mode de réalisation permettant d'obtenir un stratifié présentant une structure équilibrée, n étant un nombre pair, la somme des angles formés avec la direction circonférentielle par les fibres de toutes les couches composites disposées radialement d'un même côté du plan médian de chaque stratifié est égale en valeur absolue à la somme des angles formés avec la direction circonférentielle par les fibres de toutes les couches composites disposées radialement de l'autre côté du plan médian du stratifié.

Le signe positif ou négatif d'un angle est défini par son orientation, c'est-à-dire le sens, horaire ou anti-horaire, dans lequel il faut tourner à partir d'une droite de référence, ici la direction circonférentielle du pneumatique, définissant l'angle pour atteindre l'autre droite définissant l'angle. Par exemple, on peut prendre comme convention qu'un angle orienté dans le sens anti-horaire à partir de la droite de référence, ici la direction circonférentielle, est de signe positif et qu'un angle orienté dans le sens horaire à partir de la droite de référence, ici la direction circonférentielle, est de signe négatif. On pourrait également prendre la convention inverse.

Dans un mode de réalisation encore plus préférentiel n'induisant pas d'orientation du renforcement dans le pneumatique, la somme des angles formés avec la direction circonférentielle par les fibres des n couches composites est égale à 0°. En outre, lorsque cette caractéristique est combinée à la caractéristique selon laquelle la somme des angles formés avec la direction circonférentielle par les fibres de toutes les couches composites disposées radialement d'un même côté du plan médian de chaque stratifié est égale en valeur absolue à la somme des angles formés avec la direction circonférentielle par les fibres de toutes les couches composites disposées radialement de l'autre côté du plan médian du stratifié, chaque stratifié présente un risque réduit de présenter des défauts de rectitude et un risque réduit de s'enrouler sur lui-même.

Dans un mode de réalisation permettant d'obtenir simplement des stratifiés droits ne présentant pas de défauts de rectitude, n étant un nombre pair, l'angle formé avec la direction circonférentielle par les fibres de chaque couche composite d'un côté du plan médian de chaque stratifié est opposé à l'angle formé avec la direction circonférentielle par les fibres d'une couche composite de l'autre côté du plan médian dudit stratifié.

Préférentiellement, la zone de renfort comprend également une nappe de frettage comprenant au moins un élément filaire de renfort de frettage, cet élément filaire étant enroulé hélicoïdalement sur une largeur axiale du pneumatique avec un angle avec la direction circonférentielle strictement inférieur à 10°. Ainsi, une telle nappe de frettage améliore avantageusement les propriétés de frettage du sommet du pneumatique, notamment en raison du fait que les bandelettes ne comprennent pas de fibres orientées à 0°.

Dans un mode de réalisation très préférentiel, le pneumatique comprenant un sommet surmontant radialement vers l'extérieur du pneumatique la nappe de carcasse, le sommet est constitué par la zone de renfort de sommet et la bande de roulement.

Dans un mode de réalisation encore plus préférentiel, la zone de renfort de sommet est, à l'exception de la ou des nappes de bandelettes noyées dans la matrice de composition de caoutchouc et de la nappe de frettage, dépourvue de toute nappe renforcée par des éléments de renfort filaires agencés sensiblement parallèlement les uns aux autres et noyés dans une matrice de composition de caoutchouc. Les éléments de renfort filaires de telles nappes renforcées exclues de la zone de renfort de sommet comprennent les éléments de renfort filaires métalliques et les éléments de renfort filaires textiles.

Dans le mode de réalisation le plus préférentiel, la zone de renfort de sommet est constituée par la ou les nappes de bandelettes noyées dans la matrice de composition de caoutchouc et par la nappe de frettage.

En outre, de façon très avantageuse, le pneumatique est, radialement entre la nappe de carcasse et le sommet, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues d'entre la nappe de carcasse et le sommet comprennent les éléments de renfort filaires métalliques et les éléments de renfort filaires textiles.

Selon une autre variante de réalisation préférée de l'invention, les bandelettes sont disposées sur quatre nappes de bandelettes, les bandelettes de chaque nappe de bandelettes recouvrant les bandelettes de la nappe de bandelettes qui lui est radialement intérieure d'au moins 20% et d'au plus 80%.

De préférence, lesdites bandelettes de chaque nappe de bandelettes sont disposées de manière juxtaposées dans chaque nappe et avec un angle inférieur à 12° avec la direction circonférentielle, plus préférentiellement inférieur ou égal à 10° avec la direction circonférentielle, encore plus préférentiellement inférieur ou égal à 5° avec la direction circonférentielle et très préférentiellement sensiblement nul avec la direction circonférentielle.

Très avantageusement, chaque nappe de bandelettes est noyée dans une matrice de composition de caoutchouc qui présente, à l'état réticulé, un module sécant en extension à 10% d'allongement supérieur ou égal à 10 MPa.

Dans un mode de réalisation, chaque couche composite du stratifié, l'angle formé par les fibres orientées avec la direction circonférentielles va de -90° à 90°, de préférence, en valeur absolue, de 30° à 60°. Des angles trop petits, c'est-à-dire qui en valeur absolue sont inférieurs à 30°, confèrent une rigidité longitudinale relativement élevée à chaque stratifié et donc un coefficient de Poisson longitudinal relativement faible et donc nuisent à la réduction du bruit généré par le pneumatique. De façon analogue, des angles trop grands, c'est-à-dire qui en valeur absolue sont supérieurs à 60°, confèrent une rigidité transversale relativement élevée à chaque stratifié et donc un coefficient de Poisson transversal relativement faible et donc nuisent à la réduction du bruit généré par le pneumatique.

Dans un mode de réalisation préféré permettant de maximiser la réduction du bruit généré par le pneumatique et les propriétés mécaniques de chaque stratifié, la valeur absolue du rapport de chaque angle formé par les fibres orientées d'une couche composite de chaque stratifié sur l'angle formé par les fibres orientées de chaque autre couche composite dudit stratifié va de 0,8 à 1,2, de préférence de 0,9 à 1,1 et plus préférentiellement est égal à 1. En effet, la présence d'une couche composite dont les fibres orientées présentent un angle significativement différent des angles des fibres orientées des autres couches composites peut entraîner une réduction du gain en bruit mais également réduire les propriétés mécaniques de chaque stratifié en raison de l'hétérogénéité que cette couche composite crée dans le stratifié.

Avantageusement, le nombre n va de 2 à 8, de préférence de 2 à 6.

Selon un mode de réalisation préféré de l'invention, le nombre n est un nombre pair et est de préférence supérieur ou égal à 4 et les couches de composites sont disposées deux à deux radialement de part et d'autre du plan médian du stratifié à égale distance de celui-ci de sorte que l'angle formé avec la direction circonférentielle par les fibres de la première de ces couches composites située d'un côté du plan médian est opposé à l'angle formé avec la direction circonférentielle par les fibres de la deuxième couche composite située symétriquement de l'autre côté du plan médian. Dans ce mode de réalisation, le procédé de fabrication de chaque stratifié est relativement simple car, à chaque nouvelle couche composite, l'orientation de l'angle change, ce qui est facile à vérifier en regardant la dernière couche composite assemblée.

Selon un autre mode de réalisation préféré de l'invention, le nombre n est un nombre pair et est de préférence supérieur ou égal à 4 et les couches de composites sont disposées deux à deux radialement de part et d'autre du plan médian longitudinal du stratifié à égale distance de celui-ci de sorte que l'angle formé avec la direction circonférentielle par les fibres de la première de ces couches composites située d'un côté du plan médian est identique à l'angle formé avec la direction circonférentielle par les fibres de la deuxième couche composite située symétriquement de l'autre côté du plan médian. Dans ce mode de réalisation, le procédé de fabrication de chaque stratifié est plus complexe car il requiert, notamment pour les couches composites présentes de part et d'autre du plan médian P, de bien vérifier l'orientation correcte de l'angle de fibres.

Dans un mode de réalisation préférentiel permettant d'optimiser la réduction du bruit généré par le pneumatique, l'angle des fibres des deux couches composites du stratifié les plus extérieures radialement est égal à 45° ou à -45°.

Avantageusement, la matrice polymérique chaque couche composite de stratifié comprend un polymère thermodurcissable ou un polymère thermoplastique.

Dans un mode de réalisation, les fibres de chaque couche composite de stratifié comprennent des fibres de verre et de préférence, les fibres de chaque couche composite de stratifié comprennent majoritairement des fibres de verre. Dans ce mode de réalisation, le ratio volumique matrice polymérique/fibres de chaque couche composite de stratifié va de 30/70, de préférence de 35/65 à 80/20, de préférence à 70/30.

Dans un autre mode de réalisation, les fibres de chaque couche composite de stratifié comprennent des fibres de carbone et de préférence les fibres de chaque couche composite de stratifié comprennent majoritairement des fibres de carbone. Dans ce mode de réalisation, le ratio volumique matrice polymérique/fibres de chaque couche composite de stratifié va de 30/70, de préférence de 35/65 à 90/10, de préférence 60/40.

### MESURES ET TESTS

Les compositions de caoutchouc sont caractérisées, avant et après cuisson, comme indiqué ci-après.

### Essais de traction

On mesure en seconde élongation (i.e., après un cycle d'accommodation au taux d'extension prévu pour la mesure elle-même). Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux en extension (ou contrainte apparente, en MPa) à 10% d'allongement (notés MA 10) à 23°C ± 2°C, et dans les conditions normales d'hygrométrie.

### Test Bruit

Le bruit dit « Coast By » est représentatif du désagrément acoustique que subit un riverain au passage d'un véhicule à vitesse constante sur un sol de granulométrie intermédiaire, type autoroutier : on fait passer un véhicule, à une vitesse donnée, boîte de vitesse au point mort et moteur coupé, sur une aire de mesure normalisée (norme ISO DIS 10 844) ; des microphones enregistrent les niveaux de bruit en dB(A).

### Masse du pneumatique

Le pneumatique est pesé à l'aide d'une balance. On attribue arbitrairement un indice de 100 pour la masse d'un pneumatique témoin. Un indice inférieur à 100 pour les pneumatiques comparés au pneumatique témoin indique que les pneumatiques comparés ont une masse inférieure au pneumatique témoin, ce qui est très favorable pour la performance de résistance au roulement.

### DESCRIPTION DETAILLEE DE L'INVENTION

Dans la présente description, sauf indication expresse différente, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Tous les détails de réalisation sont donnés dans la description qui suit, illustrés par les figures 1 à 4 présentées uniquement à des fins d'exemples non limitatifs, et dans lesquelles:
- la figure 1 est une représentation schématique en perspective d'un pneumatique selon l'art antérieur ;
- la figure 2 est une vue en coupe d'un pneumatique selon l'invention ;
- la figure 3A est une représentation schématique d'un exemple de renfort sommet de pneumatique selon l'invention comportant des alignements de bandelettes;
- la figure 3B est une représentation schématique d'un deuxième exemple de renfort sommet de pneumatique selon l'invention comportant des alignements de bandelettes;
- la figure 4A est une vue éclatée d'un premier exemple de réalisation d'une bandelette conforme à l'invention constituée d'un stratifié de 6 couches composites ;
- la figure 4B est une vue éclatée d'un deuxième exemple de réalisation d'une bandelette conforme à l'invention constituée d'un stratifié de 6 couches composites.

Dans le présent document, par « recouvrement de bandelettes », ou chevauchement, on entend un agencement dont les bandelettes d'une nappe de bandelettes radialement extérieure recouvrent ou chevauchent les bandelettes de la nappe de bandelettes radialement intérieure, c'est-à-dire que la projection dans la direction radiale d'une bandelette sur la bandelette de niveau inférieur est non nulle. Le recouvrement peut varier selon les modes de réalisation. Ce recouvrement forme un couplage entre les nappes de bandelettes générant une cohésion de l'ensemble de la zone de renfort du sommet. Ce couplage permet en particulier une transmission d'efforts de cisaillement entre les nappes de bandelettes. On ne tient pas compte dans ce positionnement de la présence de la matrice de composition de caoutchouc.

Dans les figures, on a représenté un repère X, Y, Z correspondant aux orientations habituelles respectivement axiale (selon la direction Y), radiale (selon la direction Z) et circonférentielle (selon la direction X) d'un pneumatique.

Par « direction longitudinale » ou « direction circonférentielle », on entend une direction qui correspond à la périphérie du pneumatique et qui est définie par la direction de roulement du pneumatique.

Par « direction axiale », on entend une direction parallèle à l'axe de roulement du pneumatique.

Par « bande de roulement » d'un pneumatique, on entend une quantité de mélange élastomère délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « bourrelet » d'un pneumatique, on entend une partie du pneumatique destinée à prendre assise sur une jante de roue.

Dans le présent document, par « carcasse », ou « nappe de carcasse », on entend une structure de renfort pour pneumatique sous forme d'une couche constituée d'une matrice en matériau élastomère dans laquelle des filaments ou fils, généralement textiles, sont agencés selon un alignement sensiblement parallèle et longitudinal. La nappe de carcasse est avantageusement fabriquée à plat, en grande longueur, puis découpée aux dimensions adéquates pour la fabrication d'un pneumatique pour lequel la nappe de carcasse est adaptée.

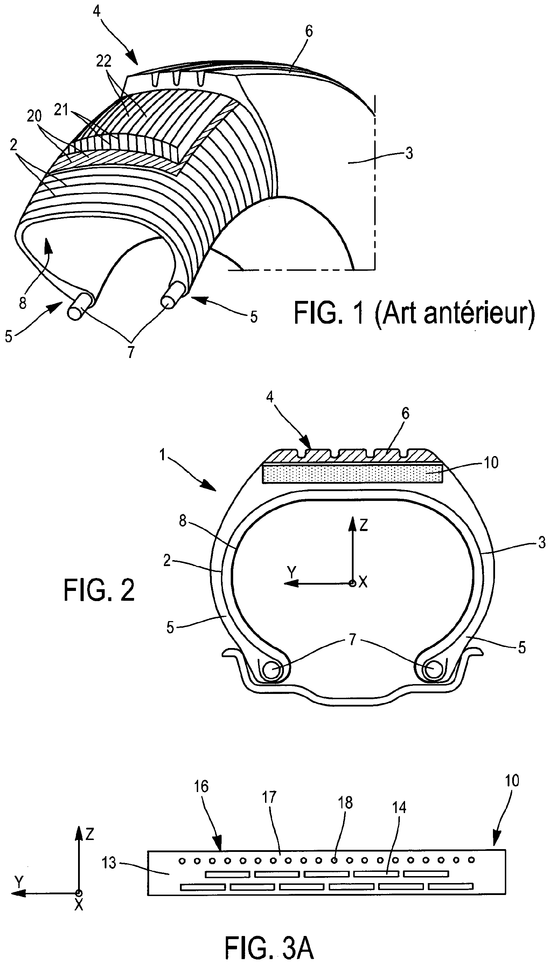

La figure 1 illustre une vue en perspective d'un pneumatique partiellement découpé couche par couche, pour véhicule de tourisme selon l'état de la technique. Une armature de carcasse 2 reliée aux bourrelets 5 autour de tringles 7 s'étend le long des flancs 3 et du sommet 4. L'armature de carcasse 2 est formée de renforts orientés radialement. Les renforts sont des câbles textiles (par exemple en nylon, rayonne, polyester). Au niveau du sommet du pneumatique, la carcasse est surmontée de deux couches croisées 20, 21 de triangulation, et d'une ceinture 22. Les deux couches croisées 20, 21 de triangulation de sommet comportent des renforts orientés selon un angle compris sensiblement entre 20 et 40 degrés de part et d'autre de la direction circonférentielle du pneumatique. Des câbles métalliques constituent les renforts des couches croisées 20, 21. Une couche 8 de mélange élastomère d'étanchéité recouvre la cavité interne du pneumatique. Une bande de roulement 6 surmonte l'ensemble. Cette architecture implique plusieurs couches de semi-finis, requérant un procédé de fabrication avec de nombreuses étapes intermédiaires. Les nombreuses couches rendent le pneumatique relativement lourd.

La figure 2 représente un pneumatique 1 selon l'invention, comprenant des flancs 3 surmontés d'un sommet 4 et une carcasse 2 s'étendant d'un bourrelet 5 à l'autre, en passant par les flancs 3 et le sommet 4. Le sommet 4 surmonte radialement vers l'extérieur du pneumatique la nappe de carcasse 2 et comprend, en plus de la bande de roulement 6, une zone de renfort sommet 10 pourvue de bandelettes formant un angle inférieur ou égal à 15° avec la direction circonférentielle, de préférence inférieur à 12° avec la direction circonférentielle, plus préférentiellement inférieur ou égal à 10° avec la direction circonférentielle, encore plus préférentiellement inférieur ou égal à 5° avec la direction circonférentielle et très préférentiellement circonférentielles, c'est-à-dire orientées sensiblement à 0° par rapport à la direction circonférentielle. Divers modes de réalisation des bandelettes sont décrits ci-après. La zone de renfort de sommet 10 est radialement agencée entre la bande de roulement 6 et la nappe de carcasse 2.

Selon une variante de réalisation préférée de l'invention, la zone de renfort 10 comporte une armature de frettage 16. Cette armature de frettage 16 comprend une unique nappe de frettage 17 comprenant au moins un élément filaire de renfort de frettage 18. En l'espèce, la nappe de frettage 17 comprend un unique élément filaire de renfort de frettage 18 enroulé hélicoïdalement sur une largeur axiale du pneumatique. L'élément filaire de renfort de frettage fait un angle AF strictement inférieur à 10° avec la direction circonférentielle du pneumatique, de préférence inférieur ou égal à 7°, et plus préférentiellement inférieur ou égal à 5°. En l'espèce, AF=+5°. L'élément filaire de renfort de frettage 18 est un assemblage de deux brins multifilamentaires de monofilaments réalisés en polyamide aromatique, ici en aramide, et présentant chacun un titre de 167 tex. Chaque brin multifilamentaire est d'abord retordu individuellement dans un premier sens de torsion à 315 t.m-1 puis, les deux brins multifilamentaires sont retordus ensemble dans un deuxième sens de torsion opposé au premier sens de torsion à 315 t.m-1.

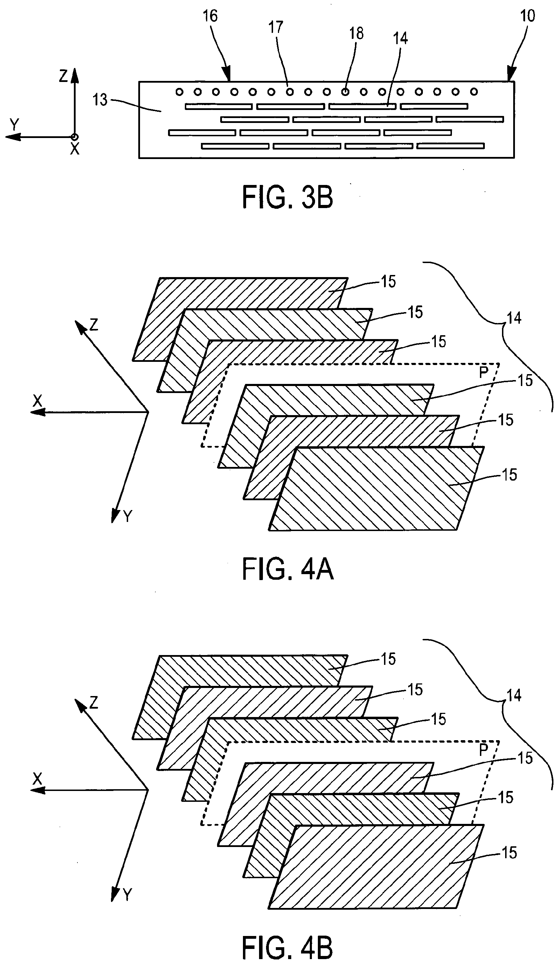

Cette armature de frettage 16 peut être avantageusement positionnée radialement intérieurement par rapport aux nappes de bandelettes ou radialement extérieurement comme cela est représenté sur les figures 3A et 3B.

On pourrait également envisager que cette armature de frettage soit positionnée radialement entre les nappes de bandelettes.

Divers modes de réalisation des bandelettes sont décrits ci-après.

La figure 3A illustre un premier mode de réalisation d'une zone sommet 10 selon l'invention. Selon ce mode de réalisation, une pluralité de bandelettes (14) constituent deux nappes de bandelettes, une première nappe de bandelettes radialement à l'intérieur et une deuxième nappe de bandelettes radialement à l'extérieur, les bandelettes de ladite deuxième nappe de bandelettes recouvrant les bandelettes de ladite première nappe de bandelettes d'au moins 20%, lesdites bandelettes (14) desdites première et deuxième nappe de bandelettes étant disposées de manière juxtaposées et avec un angle par rapport à la direction circonférentielle sensiblement proche de 0 degré, et plus largement selon un angle inférieur ou égal à 15° avec la direction circonférentielle, de préférence inférieur à 12° avec la direction circonférentielle, plus préférentiellement inférieur ou égal à 10° avec la direction circonférentielle, encore plus préférentiellement inférieur ou égal à 5° avec la direction circonférentielle. Chacune de ces nappes de bandelettes est noyée dans une matrice de composition de caoutchouc (13) qui présente, à l'état réticulé, un module sécant en extension à 10% d'allongement supérieur ou égal à 10 MPa.

Chaque bandelette de renfort des nappes de bandelettes est constituée par un stratifié de n≥2 couches composites, chaque couche composite comprenant des fibres orientées présentant un module en extension supérieur ou égal à 55 GPa, parallèles entre elles et formant un angle avec la direction circonférentielle, différent de 0°, lesdites fibres de chaque couche composite étant enrobées d'une matrice polymérique.

### Matrice de composition de caoutchouc

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

On notera que les composés mentionnés ci-dessous et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

La matrice de composition de caoutchouc est à base d'au moins un élastomère, diénique ou non diénique (par exemple thermoplastique) ; il s'agit de préférence d'une composition du type réticulée ou réticulable c'est-à-dire qu'elle comprend alors un système de réticulation (notamment un système de vulcanisation) adapté pour permettre la réticulation (durcissement) de la composition lors de sa cuisson (ou cuisson de l'article en caoutchouc tel que pneumatique intégrant une zone de sommet conforme à l'invention).

Préférentiellement, cette matrice de composition de caoutchouc a pour caractéristique sa rigidité, c'est-à-dire de présenter un module sécant en extension à 10% d'allongement, le module MA10 de chaque composition de caoutchouc est par définition supérieur ou égal à 10 MPa.

Selon une autre variante de réalisation préférée de l'invention, cette matrice de composition de caoutchouc peut également présenter une très haute rigidité, c'est-à-dire un module MA10 supérieur ou égal à 30 MPa.

De préférence, l'élastomère est un élastomère diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs connus de l'homme de l'art et habituellement utilisés dans les compositions de caoutchouc destinées à la fabrication de pneumatiques, tels que par exemple des charges renforçantes comme le noir de carbone ou la silice, des agents de couplage, des charges non-renforçantes, des plastifiants (huiles plastifiantes et/ou résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

L'homme de l'art saura, à la lumière de la présente description, ajuster la formulation de la composition de caoutchouc afin d'atteindre les niveaux de propriétés (notamment module MA10) souhaités, et adapter la formulation à l'application spécifique envisagée.

Il est bien connu d'augmenter la rigidité des compositions de caoutchouc en augmentant par exemple leur taux de charge renforçante, le taux de soufre et autres agents de vulcanisation, ou encore en introduisant des résines renforçantes, toutes ces solutions pouvant être cumulées pour l'obtention des plus hautes rigidités.

L'espace dans la direction radiale (ou épaisseur) entre deux nappes de bandelettes successives occupée par la matrice de composition de caoutchouc est de préférence comprise entre 0,05 et 2 mm, plus préférentiellement entre 0,1 et 1 mm. Par exemple, des épaisseurs de 0,2 à 0,8 mm se sont révélées tout à fait convenir pour le renforcement d'un pneumatique.

### Nappes de bandelettes

Dans une nappe de bandelettes, le positionnement des bandelettes en quinconce est réalisé par exemple par un premier trancanage débutant à un azimut donné, et un second trancanage avec un pas identique débutant à 180 degrés. En variante, le positionnement des bandelettes est réalisé par un premier trancanage dans une direction axiale donnée, suivi d'un second trancanage dans la direction axiale opposée.

Dans l'exemple de réalisation de la figure 3A, avec une disposition symétrique, deux nappes de bandelettes (14) sont agencées avec un décalage latéral entre les positions des bandelettes des deux nappes de bandelettes d'environ un demi-pas de la bandelette. Le plan principal de chaque nappe de bandelettes est sensiblement axial. Un tel agencement a pour effet de recouvrir les ponts de mélange élastomère de la première nappe, par les bandelettes constituant la deuxième nappe de bandelettes. Les ponts de mélange élastomère entre les bandelettes de la première nappe de bandelettes sont ainsi positionnés sensiblement au milieu des largeurs respectives des bandelettes de la nappe de bandelettes adjacente. Dans cet exemple, la nappe de bandelettes radialement extérieure comporte un enroulement de moins de façon à compenser l'effet du décalage latéral. Le recouvrement moyen entre les bandelettes des deux nappes de bandelettes est d'au moins 20% et de préférence supérieur à 40% et inférieur ou égal à 80% et de préférence à 60%.

L'exemple de réalisation de la figure 3A comporte deux nappes de bandelettes de même largeur, dont l'une est décalée par rapport à l'autre.

En variante, les points de départ et d'arrêt des nappes de bandelettes peuvent éventuellement être unifiés afin d'assurer une certaine uniformité.

La figure 3B illustre un autre mode de réalisation d'une zone sommet 10 selon l'invention. Selon ce mode de réalisation, une pluralité de bandelettes (14) constituent quatre nappes de bandelettes, les bandelettes de chaque nappe de bandelettes recouvrant les bandelettes de la nappe de bandelettes qui lui est radialement intérieure d'au moins 20% et d'au plus 80%, ici d'au plus 50%, lesdites bandelettes (14) de chaque nappe étant disposées de manière juxtaposées et avec un angle par rapport à la direction circonférentielle sensiblement proche de 0 degré, et plus largement selon un angle inférieur ou égal à 15° avec la direction circonférentielle, de préférence inférieur à 12° avec la direction circonférentielle, plus préférentiellement inférieur ou égal à 10° avec la direction circonférentielle, encore plus préférentiellement inférieur ou égal à 5° avec la direction circonférentielle. Le positionnement des bandelettes en quinconce est réalisé par exemple par un premier trancanage débutant à un azimut donné et les trancanages suivants pouvant démarrer tous les 90°.

### Bandelettes composites

Chaque bandelette (14) de renfort est constituée par un stratifié de n supérieur ou égal à deux couches composites, n étant un nombre pair. Chaque couche composite comprend des fibres à haut module orientées, parallèles entre elles et formant un angle avec la direction circonférentielle, différent de 0°. Lesdites fibres de chaque couche composite étant enrobées d'une matrice polymérique, ledit stratifié comportant un nombre pair n de couches composites.

Les bandelettes présentent un plan médian longitudinal P disposé à mi-hauteur de la bandelette (la hauteur étant dans la direction radiale du pneumatique), tel que représenté sur les figures 4A et 4B.

L'angle formé avec la direction circonférentielle par les fibres de chaque couche composite d'un côté du plan médian P de chaque stratifié est opposé à l'angle formé avec la direction circonférentielle par les fibres d'une couche composite de l'autre côté du plan médian P du stratifié.

Le stratifié de couches composites est tel que la somme des angles formés avec la direction circonférentielle par les fibres de toutes les couches composites disposées radialement d'un même côté du plan médian P du stratifié est égale en valeur absolue à la somme des angles formés avec la direction circonférentielle par les fibres de toutes les couches composites disposées radialement de l'autre côté du plan médian P du stratifié. De plus, la somme des angles formés avec la direction circonférentielle par les fibres des n couches composites est égale à 0°.

De préférence, l'angle formé par les fibres orientées avec la direction circonférentielles va de -90° à 90° et plus préférentiellement de -60° à -30° lorsque l'angle est orienté négativement et de 30° à 60° lorsque l'angle est orienté positivement.

Le stratifié comporte un nombre pair n de couches composites. De préférence, le nombre n va de 2 à 8, de préférence 2 à 6. Ainsi, comme n est pair, n=2, 4, 6, 8 et de préférence n=2, 4 ou 6.

Avantageusement, le nombre n est supérieur ou égal à 4. Ainsi, préférentiellement n=4 ou 6 et très préférentiellement n=6.

Selon une première variante préférentielle de réalisation représentée à la figure 4A, les couches de composites sont telles qu'elles sont disposées deux par deux, radialement de part et d'autre du plan médian à égale distance de celui-ci de sorte que l'angle formé avec la direction circonférentielle par les fibres de la première de ces couches composites située d'un côté du plan médian P est opposé à l'angle formé avec la direction circonférentielle par les fibres de la deuxième couche composite située symétriquement de l'autre côté du plan.

Selon une deuxième variante préférentielle de réalisation représentée à la figure 4B, les couches de composites sont disposées deux à deux radialement de part et d'autre du plan médian longitudinal du stratifié à égale distance de celui-ci de sorte que l'angle formé avec la direction circonférentielle par les fibres de la première de ces couches composites située d'un côté du plan médian P est identique à l'angle formé avec la direction circonférentielle par les fibres de la deuxième couche composite située symétriquement de l'autre côté du plan.

Préférentiellement, l'angle des fibres des deux couches composites du stratifié les plus extérieures radialement est égal à 45° ou à -45°.

Les bandelettes composites peuvent être réalisées à partir de couches composites préimprégnées NTPT ThinPreg 450^{™}ou NTPT ThinPreg 402^{™}. (qui peuvent être obtenues notamment en l'application du procédé décrit dans le document WO 2016/198171).

Les couches composites préimprégnées sont déposées crues ou non polymérisées selon les angles souhaités de stratification et forment une laize d'une largeur supérieure à celle des bandelettes.

La laize stratifiée est découpée en bandelette crue ou non polymérisée de largeur souhaitée.

Les bandelettes crues sont trancannées sur un tambour de grand diamètre (ie 2 mètre de diamètre). Les bandelettes sont cuites sous vide (-850mBar) et sous pression (5 bars) à l'aide des périphériques de cuisson usuels (tels que tissu d'arrachage, feutre de drainage, film anti-adhésif micro-perforé ou non, film à vide etc.).

Selon un autre mode de réalisation la laize stratifiée est déposée sur un tambour de grand diamètre et cuite sous vide (-850mBar) et sous pression (5 bars) à l'aide des périphériques de cuisson usuels. Après cuisson, la laize est découpée en bandelettes.

De préférence, les bandelettes présentent une épaisseur inférieure ou égale à 1 mm, et plus préférentiellement inférieure ou égale à 0,7 mm.

### Eléments constitutifs des bandelettes

La matrice polymérique de chaque couche composite de stratifié d'une bandelette comprend un polymère thermodurcissable ou un polymère thermoplastique, utilisé seul respectivement ou en coupage avec d'autres polymères.

Préférentiellement la matrice polymérique peut être choisie parmi les résines thermodurcissables de type polyépoxides, polyester insaturés, vinylester, cyanate ester, bismalémimides, les polyuréthanes et un coupage de ces résines, ou bien parmi les résines thermoplastiques comme les polyesters (PET, PBT, PEN, PBN), les polyamides (nylon, aramide), les polyimides, les polyethersulfones, les polyphénylènesulfone, les polycétones (PK, PEEK). Conviennent particulièrement parmi les résines précitées, les résines thermodurcissables ayant une température de transition vitreuse supérieure ou égale à 160°C et les résines thermoplastiques ayant une température de fusion supérieure ou égale à 180°C. Notons que des charges renforçantes (silice, noir de carbone), ou des charges thermoplastiques (Orgasol de chez Arkema) ou des charges élastomèriques (Kane Ace de chez Kaneka) pourront être ajoutées aux résines ci-dessus.

Conviennent particulièrement à l'invention des couches composites possédant une masse surfacique d'environ 200g/m² et une épaisseur avant cuisson d'environ 0,2 mm.

De préférence, on utilise des couches plus fines ayant une masse surfacique inférieure ou égale à 80g/m², plus préférentiellement cette masse allant de 18 g/m² à 80g/m², et une épaisseur avant cuisson inférieure à 0,06 mm.

L'homme de l'art saura adapter le nombre de couches composites selon la masse surfacique de ces couches composites.

Les fibres (15) de chaque couche composite de stratifié comprennent des fibres de haut module. On entendra dans la présente demande, par haut module, un module en extension (module d'Young) supérieur ou égal à 55 GPa. Un tel module en extension est mesuré conformément à la norme ASTM D4848-98 (2012).

Selon une variante de réalisation préférée de l'invention les fibres à haut module comprennent des fibres de verre, De façon préférentielle, les fibres de verre sont majoritaires, c'est-à-dire représentent plus de 50 % des fibres d'une même couche.

Plus préférentiellement encore, les fibres de chaque couche composite de stratifié sont constitués par des fibres de verre.

Préférentiellement, le ratio volumique matrice polymérique/fibres de chaque couche composite de stratifié allant de 30/70, de préférence de 35/65 à 80/20, de préférence 70/30, et étant préférentiellement d'environ 45/55.

Selon une autre variante de réalisation préférée de l'invention, les fibres à haut module comprennent des fibres de carbone. De façon préférentielle, les fibres de carbone sont majoritaires, c'est-à-dire représente plus de 50 % des fibres d'une même couche.

Plus préférentiellement encore, les fibres de chaque couche composite de stratifié sont constitués par des fibres de carbone.

Préférentiellement, le ratio volumique matrice polymérique/fibres de chaque couche composite de stratifié allant de 30/70, de préférence de 35/65 à 90/10, de préférence à 60/40, et étant préférentiellement d'environ 50/50.

Selon d'autres variantes de réalisation préférées de l'invention, les fibres à haut module comprennent des fibres aramide, des fibres de basalte ou des fibres de quartz.

### EXEMPLES

Les exemples qui suivent permettent d'illustrer l'invention, cette dernière ne saurait cependant être limitée à ces seuls exemples.

Ces exemples ont pour but de démontrer les propriétés améliorées de pneumatiques conformes à l'invention par rapport à un pneumatique selon l'art antérieur.

On compare dans une même dimension 175/65R14 82T à une pression de 2,4 bars et une charge de 0,8 ZETRTO, les pneumatiques suivants :
- un pneumatique PT1 selon l'art antérieur WO2017/013575 (représenté sur sa figure 8),
- un pneumatique PA2 conforme à l'invention.

Les pneumatiques conformes PT1 et PA2 comprennent tous une zone de renfort de sommet comprenant deux nappes de bandelettes constituées par des bandelettes de renfort, de largeur 15 mm, juxtaposées et avec un angle d'environ 0° par rapport à la direction circonférentielles, les deux nappes de bandelettes présentant un recouvrement de 46%. Le pneumatique PA2 possède une frette aramide disposée radialement extérieurement par rapport aux nappes de bandelettes.

On notera que, pour le pneumatique PA2, le sommet 4 est constitué par la zone de renfort de sommet 10 et la bande de roulement 6.

On notera également que, pour le pneumatique PA2, la zone de renfort de sommet 10 est, à l'exception des nappes de bandelettes noyées dans la matrice de composition de caoutchouc et de la nappe de frettage, dépourvue de toute nappe renforcée par des éléments de renfort filaires agencés sensiblement parallèlement les uns aux autres et noyés dans une matrice de composition de caoutchouc. Les éléments de renfort filaires de telles nappes renforcées exclues de la zone de renfort de sommet comprennent les éléments de renfort filaires métalliques et les éléments de renfort filaires textiles.

On notera également que la zone de renfort de sommet 10 du pneumatique PA2 est constituée par les nappes de bandelettes noyées dans la matrice de composition de caoutchouc et par la nappe de frettage.

On notera enfin que le pneumatique PA2 est, radialement entre la nappe de carcasse 2 et le sommet 4, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues d'entre la nappe de carcasse 2 et le sommet 4 comprennent les éléments de renfort filaires métalliques et les éléments de renfort filaires textiles.

Les bandelettes du pneumatique PT1 selon l'art antérieur sont réalisées avec une matrice en PET (polyéthylène téréphtalate), dans laquelle sont intégrés des câbles textiles (aramide, retors constitués de 2 brins de 167 tex retordus ensemble avec une torsion de 315 tours par mètre à 0°. Elles présentent une épaisseur de 0.5mm.

Les bandelettes du pneumatique PA2 réalisées conformément aux modes de réalisation décrits précédemment en référence aux figures 3A et 4A, sont constituées par un stratifié comprenant 6 couches composites enrobées d'une matrice polymérique thermodurcissable constituée par une résine polyépoxide (couches composites commercialisées par la société NTPT sous le nom commercial « ThinPreg 402^{™} »). Chaque couche composite a des fibres orientées, parallèles entre elles et formant un angle de -45° ou de +45° avec la direction circonférentielle, de sorte que les couches de composites sont telles qu'elles sont disposées deux par deux, radialement de part et d'autre du plan médian à égale distance de celui-ci de sorte que l'angle formé avec la direction circonférentielle par les fibres de la première des couches composites du couple de couches considérées qui est située d'un côté du plan médian est opposé à l'angle formé avec la direction circonférentielle par les fibres de la deuxième des couches composites du couple de couches considérées qui est située de l'autre côté du plan médian.

Ainsi, la valeur absolue du rapport de chaque angle formé par les fibres orientées d'une couche composite de chaque stratifié sur l'angle formé par les fibres orientées de chaque autre couche composite dudit stratifié va de 0,8 à 1,2, de préférence de 0,9 à 1,1 et plus préférentiellement est ici égal à 1.

Chaque couche composite a une épaisseur inférieure ou égale à 80 microns et les bandelettes une épaisseur inférieure ou égale à 0,5 mm.

Les bandelettes du pneumatique PA2 comprennent dans leurs couches composites des fibres de verre haut module de type H commercialisé par la société Owens Corning avec ratio volumique matrice polymérique/fibres de chaque couche composite de 50/50 et une épaisseur de 0,5mm.

L'épaisseur de matrice de composition de caoutchouc entre les deux nappes de bandelettes est de 0,3 mm, la matrice de composition de caoutchouc ayant un module MA10 de 54 MPa.

La matrice de compositions de caoutchouc utilisée ici, est une composition de haute rigidité (module MA10 égal à 54 MPa) typiquement du type pour bourrelets (5) de pneumatique, à base de caoutchouc naturel, de noir de carbone (environ 75 pce), de résine renforçante (environ 20 pce de résine phénolique associés à environ 8 pce de H3M et HMT), d'antioxydant, d'un système de vulcanisation à fort taux de soufre (environ 5 pce) et des additifs usuels de vulcanisation ; elle comporte en outre environ 10 pce d'huile paraffinique et 8 pce de résine tackifiante (résine butyl-phénol-acétylène). L'adhésion entre les nappes de bandelettes et la matrice de composition de caoutchouc est assurée par une colle du type RFL qui a été déposée de manière connue sur les bandelettes.

Le tableau 1 qui suit, représente pour chaque pneumatique, la comparaison de leur masse et l'indice de bruit (avec un indice de 100 pour le pneumatique témoin PT1).

On observe des gains en performance bruit obtenus pour le pneumatique PA2 conforme à l'invention vis-à-vis du pneumatique PT1 de l'art antérieur, la différence de 2 points sur l'indice de performance bruit étant significative. On constate de plus que cette amélioration de performance bruit s'accompagne d'une amélioration de performance en terme de masse du pneumatique alors même que le pneumatique PT1 de l'art antérieur a démontré qu'il permettait une baisse significative de masse vis-à-vis de pneumatiques ayant des architectures classiques.

**Tableau 1**

| **Pneumatique** | **Masse du pneumatique** | **Bruit Coast By** |
|---|---|---|
| **PT1** | 100 | 100 |
| **PA2** | 97 | 98 |

## Revendications

1. Pneumatique (1) comprenant une nappe de carcasse (2) reliant deux bourrelets (5) par l'intermédiaire de deux flancs (3), ladite nappe de carcasse (2) étant surmontée radialement vers l'extérieur du pneumatique par une zone de renfort de sommet (10) elle-même surmontée radialement vers l'extérieur du pneumatique par une bande de roulement (6), la zone de renfort de sommet (10) comprenant une pluralité de bandelettes (14) de renfort disposées sur au moins une nappe de bandelettes, lesdites bandelettes (14) étant disposées de manière juxtaposées et avec un angle inférieur ou égal à 15° par rapport à la direction circonférentielle, **caractérisé en ce que** chaque bandelette de renfort est constituée par un stratifié de n>2 couches composites, chaque couche composite comprenant des fibres orientées (15) présentant un module en extension supérieur ou égal à 55 GPa, parallèles entre elles et formant un angle avec la direction circonférentielle, différent de 0°, lesdites fibres (15) de chaque couche composite étant enrobées d'une matrice polymérique, pneumatique (1) dans lequel, n étant un nombre pair, la somme des angles formés avec la direction circonférentielle par les fibres (15) de toutes les couches composites disposées radialement d'un même côté du plan médian (P) de chaque stratifié est égale en valeur absolue à la somme des angles formés avec la direction circonférentielle par les fibres (15) de toutes les couches composites disposées radialement de l'autre côté du plan médian (P) dudit stratifié, le plan médian (P) étant un plan médian longitudinal disposé à mi-hauteur de la bandelette, la hauteur étant dans la direction radiale du pneumatique.

2. Pneumatique (1) selon la revendication précédente, la zone de renfort de sommet (10) comprend au moins deux nappes (12) de bandelettes (14), une première nappe de bandelettes radialement à l'intérieur et une deuxième nappe de bandelettes radialement à l'extérieur, lesdites bandelettes (14) de chaque première et deuxième nappe (12) de bandelettes étant disposées de manière juxtaposées et avec un angle inférieur ou égal à 15° par rapport à la direction circonférentielle (Z).

3. Pneumatique (1) selon la revendication précédente, dans lequel le recouvrement moyen entre les bandelettes (14) des deux nappes de bandelettes est supérieur ou égal à 20%, de préférence à 40%.

4. Pneumatique (1) selon la revendication 2 ou 3, dans lequel le recouvrement moyen entre les bandelettes (14) des deux nappes de bandelettes est inférieur ou égal à 80%, de préférence à 60%.

5. Pneumatique (1) selon l'une quelconque des revendications précédentes, dans lequel chaque nappe de bandelettes est noyée dans une matrice de composition de caoutchouc qui présente, à l'état réticulé, un module sécant en extension à 10% d'allongement supérieur ou égal à 10 MPa.

6. Pneumatique (1) selon l'une quelconque des revendications précédentes, dans lequel la somme des angles formés avec la direction circonférentielle par les fibres (15) des n couches composites de chaque stratifié est égale à 0°.

7. Pneumatique (1) selon l'une quelconque des revendications précédentes, dans lequel, n étant un nombre pair, l'angle formé avec la direction circonférentielle parles fibres (15) de chaque couche composite d'un côté du plan médian (P) de chaque stratifié est opposé à l'angle formé avec la direction circonférentielle par les fibres (15) d'une couche composite de l'autre côté du plan médian (P) dudit stratifié.

8. Pneumatique (1) selon l'une quelconque des revendications précédentes, dans lequel la zone de renfort comprend également une nappe de frettage comprenant au moins un élément filaire de renfort de frettage, cet élément filaire étant enroulé hélicoïdalement sur une largeur axiale du pneumatique avec un angle avec la direction circonférentielle strictement inférieur à 10°.

9. Pneumatique (1) selon l'une quelconque des revendications précédentes, dans lequel pour chaque couche composite du stratifié, l'angle formé par les fibres orientées (15) avec la direction circonférentielles va de -90° à 90°, de préférence, en valeur absolue, de 30° à 60°.

10. Pneumatique (1) selon l'une quelconque des revendications précédentes, dans lequel la valeur absolue du rapport de chaque angle formé par les fibres orientées (15) d'une couche composite de chaque stratifié sur l'angle formé par les fibres orientées (15) de chaque autre couche composite dudit stratifié va de 0,8 à 1,2, de préférence de 0,9 à 1,1 et plus préférentiellement est égal à 1.

11. Pneumatique (1) selon l'une quelconque des revendications précédentes, dans lequel le nombre n va de 4 à 8, de préférence de 4 à 6.

12. Pneumatique (1) selon l'une quelconque des revendications 1 à 11, dans lequel le nombre n est pair et dans lequel les couches de composites sont disposées deux à deux radialement de part et d'autre du plan médian (P) du stratifié à égale distance de celui-ci de sorte que l'angle formé avec la direction circonférentielle par les fibres (15) de la première de ces couches composites située d'un côté du plan médian (P) est opposé à l'angle formé avec la direction circonférentielle par les fibres (15) de la deuxième couche composite située symétriquement de l'autre côté du plan médian (P).

13. Pneumatique (1) selon l'une quelconque des revendications 1 à 11, dans lequel le nombre n est pair et dans lequel les couches de composites sont disposées deux à deux radialement de part et d'autre du plan médian (P) du stratifié à égale distance de celui-ci de sorte que l'angle formé avec la direction circonférentielle par les fibres (15) de la première de ces couches composites située d'un côté du plan médian (P) est identique à l'angle formé avec la direction circonférentielle par les fibres (15) de la deuxième couche composite située symétriquement de l'autre côté du plan médian (P).

## Patentansprüche

1. Reifen (1) umfassend eine Karkassenlage (2), die zwei Wülste (5) mittels zweier Flanken (3) verbindet, wobei die Karkassenlage (2) radial zum Äußeren des Reifens hin von einem Scheitelverstärkungsbereich (10) überdeckt ist, der seinerseits radial zum Äußeren des Reifens hin von einem Laufstreifen (6) überdeckt ist, wobei der Scheitelverstärkungsbereich (10) eine Mehrzahl von Verstärkungsstreifen (14) umfasst, die auf mindestens einer Streifenlage angeordnet sind, wobei die Streifen (14) nebeneinander und mit einem Winkel kleiner als oder gleich 15° bezogen auf die Umfangsrichtung angeordnet sind, **dadurch gekennzeichnet, dass** jeder Verstärkungsstreifen von einem Laminat aus n > 2 Verbundschichten gebildet ist, wobei jede Verbundschicht orientierte Fasern (15) mit einem Dehnungsmodul größer als oder gleich 55 GPa umfasst, die parallel zueinander verlaufen und einen Winkel mit der Umfangsrichtung bilden, der von 0° verschieden ist, wobei die Fasern (15) jeder Verbundschicht von einer Polymermatrix ummantelt sind, wobei bei dem Reifen (1) n eine gerade Zahl ist, wobei die Summe der Winkel, die mit der Umfangsrichtung von den Fasern (15) aller Verbundschichten gebildet werden, die radial auf einer selben Seite der Mittelebene (P) jedes Laminats angeordnet sind, im Absolutwert gleich der Summe der Winkel ist, die mit der Umfangsrichtung von den Fasern (15) aller Verbundschichten gebildet werden, die radial auf der anderen Seite der Mittelebene (P) des Laminats angeordnet sind, wobei die Mittelebene (P) eine Mittelebene in Längsrichtung ist, die auf mittlerer Höhe des Streifens angeordnet ist, wobei die Höhe in der radialen Richtung des Reifens verläuft.

2. Reifen (1) nach dem vorhergehenden Anspruch, wobei der Scheitelverstärkungsbereich (10) mindestens zwei Lagen (12) von Streifen (14) umfasst, eine erste Streifenlage radial innen und eine zweite Streifenlage radial außen, wobei die Streifen (14) jeder ersten und zweiten Streifenlage (12) nebeneinander und mit einem Winkel kleiner als oder gleich 15° bezogen auf die Umfangsrichtung (Z) angeordnet sind.

3. Reifen (1) nach dem vorhergehenden Anspruch, wobei die mittlere Überlappung zwischen den Streifen (14) der zwei Streifenlagen größer als oder gleich 20 %, vorzugsweise größer als oder gleich 40 % ist.

4. Reifen (1) nach Anspruch 2 oder 3, wobei die mittlere Überlappung zwischen den Streifen (14) der zwei Streifenlagen kleiner als oder gleich 80 %, vorzugsweise kleiner als oder gleich 60 % ist.

5. Reifen (1) nach einem der vorhergehenden Ansprüche, wobei jede Lage von Streifen in eine Matrix aus einer Gummizusammensetzung eingebettet ist, die im vernetzten Zustand einen Dehnungssekantenmodul bei 10 % Dehnung von größer als oder gleich 10 MPa aufweist.

6. Reifen (1) nach einem der vorhergehenden Ansprüche, wobei die Summe der Winkel, die mit der Umfangsrichtung von den Fasern (15) der n Verbundschichten jedes Laminats gebildet werden, gleich 0° ist.

7. Reifen (1) nach einem der vorhergehenden Ansprüche, wobei der Winkel, der mit der Umfangsrichtung von den Fasern (15) jeder Verbundschicht auf einer Seite der Mittelebene (P) jedes Laminats gebildet wird, dem Winkel entgegengesetzt ist, der mit der Umfangsrichtung von den Fasern (15) einer Verbundschicht auf der anderen Seite der Mittelebene (P) des Laminats gebildet wird, wobei n eine gerade Zahl ist.

8. Reifen (1) nach einem der vorhergehenden Ansprüche, wobei der Verstärkungsbereich auch eine Umreifungslage umfasst, die mindestens ein Umreifungsverstärkungs-Drahtelement umfasst, wobei dieses Drahtelement schraubenförmig über eine axiale Breite des Reifens mit einem Winkel mit der Umfangsrichtung von streng kleiner als 10° gewickelt ist.

9. Reifen (1) nach einem der vorhergehenden Ansprüche, wobei für jede Verbundschicht des Laminats der Winkel, der von den orientierten Fasern (15) mit der Umfangsrichtung gebildet wird, von -90° bis 90° reicht, vorzugsweise im Absolutwert von 30° bis 60°.

10. Reifen (1) nach einem der vorhergehenden Ansprüche, wobei der Absolutwert des Verhältnisses jedes Winkels, der von den orientierten Fasern (15) einer Verbundschicht jedes Laminats gebildet wird, zum Winkel, der von den orientierten Fasern (15) jeder anderen Verbundschicht des Laminats gebildet wird, von 0,8 bis 1,2, vorzugsweise von 0,9 bis 1,1 reicht und besser noch gleich 1 ist.

11. Reifen (1) nach einem der vorhergehenden Ansprüche, wobei die Zahl n von 4 bis 8, vorzugsweise von 4 bis 6 reicht.

12. Reifen (1) nach einem der Ansprüche 1 bis 11, wobei die Zahl n gerade ist und wobei die Verbundschichten paarweise radial beiderseits der Mittelebene (P) des Laminats in gleichem Abstand zu dieser angeordnet sind, so dass der Winkel, der mit der Umfangsrichtung von den Fasern (15) der ersten dieser Verbundschichten gebildet wird, die sich auf einer Seite der Mittelebene (P) befindet, dem Winkel entgegengesetzt ist, der mit der Umfangsrichtung von den Fasern (15) der zweiten Verbundschicht gebildet wird, die sich symmetrisch auf der anderen Seite der Mittelebene (P) befindet.

13. Reifen (1) nach einem der Ansprüche 1 bis 11, wobei die Zahl n gerade ist und wobei die Verbundschichten paarweise radial beiderseits der Mittelebene (P) des Laminats in gleichem Abstand zu dieser angeordnet sind, so dass der Winkel, der mit der Umfangsrichtung von den Fasern (15) der ersten dieser Verbundschichten gebildet wird, die sich auf einer Seite der Mittelebene (P) befindet, mit dem Winkel identisch ist, der mit der Umfangsrichtung von den Fasern (15) der zweiten Verbundschicht gebildet wird, die sich symmetrisch auf der anderen Seite der Mittelebene (P) befindet.

## Claims

1. Tyre (1) comprising a carcass ply (2) connecting two beads (5) via two sidewalls (3), said carcass ply (2) being surmounted radially towards the outside of the tyre by a crown reinforcing zone (10) which is itself surmounted radially towards the outside of the tyre by a tread (6), the crown reinforcing zone (10) comprising a plurality of reinforcing strips (14) arranged over at least one ply of strips, said strips (14) being arranged so that they are juxtaposed and at an angle less than or equal to 15° with respect to the circumferential direction, **characterized in that** each reinforcing strip is made up of a laminate of n>2 composite layers, each composite layer containing oriented fibres (15) having a tensile modulus greater than or equal to 55 GPa, which are parallel to one another and make with the circumferential direction an angle distinct from 0°, said fibres (15) of each composite layer being coated in a polymer matrix, in which tyre (1), with n being an even number, the sum of the angles formed with the circumferential direction by the fibres (15) of all the composite layers arranged radially on the one same side of the midplane (P) of each laminate is equal, in terms of absolute value, to the sum of the angles formed with the circumferential direction by the fibres (15) of all the composite layers arranged radially on the other side of the midplane (P) of said laminate, the midplane (P) being a longitudinal midplane arranged mid-way up the height of the strip, the height being in the radial direction of the tyre.

2. Tyre (1) according to the preceding claim, in which the crown reinforcing zone (10) comprises at least two plies (12) of strips (14), a first ply of strips radially on the inside and a second ply of strips radially on the outside, said strips (14) of each first and second ply (12) of strips being arranged so that they are juxtaposed and at an angle less than or equal to 15° with respect to the circumferential direction (Z).

3. Tyre (1) according to the preceding claim, in which the mean overlap between the strips (14) of the two plies of strips is greater than or equal to 20%, preferably greater than or equal to 40%.

4. Tyre (1) according to Claim 2 or 3, in which the mean overlap between the strips (14) of the two plies of strips is less than or equal to 80%, preferably less than or equal to 60%.

5. Tyre (1) according to any one of the preceding claims, in which each ply of strips is embedded in a matrix of rubber composition which, when crosslinked, has a secant extension modulus at 10% strain greater than or equal to 10 MPa.

6. Tyre (1) according to any one of the preceding claims, in which the sum of the angles formed with the circumferential direction by the fibres (15) of the n composite layers of each laminate is equal to 0°.

7. Tyre (1) according to any one of the preceding claims, in which, with n being an even number, the angle formed with the circumferential direction by the fibres (15) of each composite layer on one side of the midplane (P) of each laminate is the opposite of the angle formed with the circumferential direction by the fibres (15) of a composite layer on the other side of the midplane (P) of said laminate.

8. Tyre (1) according to any one of the preceding claims, in which the reinforcing zone also comprises a hooping ply comprising at least one filamentary hooping reinforcing element, this filamentary element being wound helicoidally over an axial width of the tyre at an angle to the circumferential direction strictly less than 10°.

9. Tyre (1) according to any one of the preceding claims, in which, for each composite layer of the laminate, the angle formed by the oriented fibres (15) with the circumferential direction ranges from -90° to 90°, and preferably, in terms of absolute value, from 30° to 60°.

10. Tyre (1) according to any one of the preceding claims, in which the absolute value of the ratio of each angle formed by the oriented fibres (15) of one composite layer of each laminate to the angle formed by the oriented fibres (15) of each other composite layer of said laminate ranges from 0.8 to 1.2, preferably from 0.9 to 1.1, and more preferably is equal to 1.

11. Tyre (1) according to any one of the preceding claims, in which the number n varies from 4 to 8, preferably from 4 to 6.

12. Tyre (1) according to any one of Claims 1 to 11, in which the number n is an even number and in which the composite layers are arranged pairwise radially on either side of the midplane (P) of the laminate at equal distance therefrom, so that the angle formed with the circumferential direction by the fibres (15) of the first of these composite layers which is situated on one side of the midplane (P) is the opposite of the angle formed with the circumferential direction by the fibres (15) of the second composite layer which is situated symmetrically on the other side of the midplane (P).

13. Tyre (1) according to any one of Claims 1 to 11, in which the number n is an even number and in which the composite layers are arranged pairwise radially on either side of the midplane (P) of the laminate at equal distance therefrom, so that the angle formed with the circumferential direction by the fibres (15) of the first of these composite layers which is situated on one side of the midplane (P) is identical to the angle formed with the circumferential direction by the fibres (15) of the second composite layer which is situated symmetrically on the other side of the midplane (P).
